(19) Europäisches Patentamt
European Patent Office
Office européen des brevets

(11) Veröffentlichungsnummer: **0 020 801**
**A1**

# (12) EUROPÄISCHE PATENTANMELDUNG

(21) Anmeldenummer: **79101976.3**

(22) Anmeldetag: **15.06.79**

(51) Int. Cl.³: **G 01 J 3/42**, G 01 N 21/35

(43) Veröffentlichungstag der Anmeldung: **07.01.81**
**Patentblatt 81/1**

(84) Benannte Vertragsstaaten: **BE DE FR GB IT NL**

(71) Anmelder: **Bodenseewerk Geosystem GmbH, Alte Nussdorfer Strasse 15, D-7770 Überlingen/Bodensee (DE)**

(72) Erfinder: **Spaeth, Tilman Philip, Dipl.-Ing., Am Häslerain 22, D-7767 Sipplingen (DE)**

(74) Vertreter: **Weisse, Jürgen, Dipl.-Phys. et al, Bökenbusch 41 Postfach 11 03 86, D-5620 Velbert 11-Langenberg (DE)**

## (54) Bifrequenz-Infrarotspektrometer.

(57) Ein Bifrequenz-Infrarotspektrometer enthält ein Filterrad im Strahlengang eines durch eine Probenküvette geleiteten Strahlungsbündels (20). Das Filterrad enthält einen umlaufenden scheibenförmigen Träger (48) mit zwei diametral einander gegenüberliegenden Durchbrüchen (32, 34). Auf dem Träger (48) sind detektorseitig zwei halbkreisförmige Filterplatten angebracht. Eine Signalauswerterschaltung enthält einen Integrator (40), welcher das Detektorsignal während der Zeitintervalle integriert, während welcher das Lichtbündel (20) durch die Durchbrüche (32, 34) und die Filterplatten hindurch auf den Detektor (12) fällt. Durch eine Klemmschaltung (36) wird das Detektorsignal jeweils bis kurz vor diesen Integrationsintervallen an eine Nullinie geklemmt. Dadurch wird der Einfluß der Eigenstrahlung der Filter (24, 26) und der vom Filter reflektierten Strahlung unterdrückt. Die integrierten Detektorsignale werden abwechselnd in je einer analogen Speicherschaltung gespeichert.

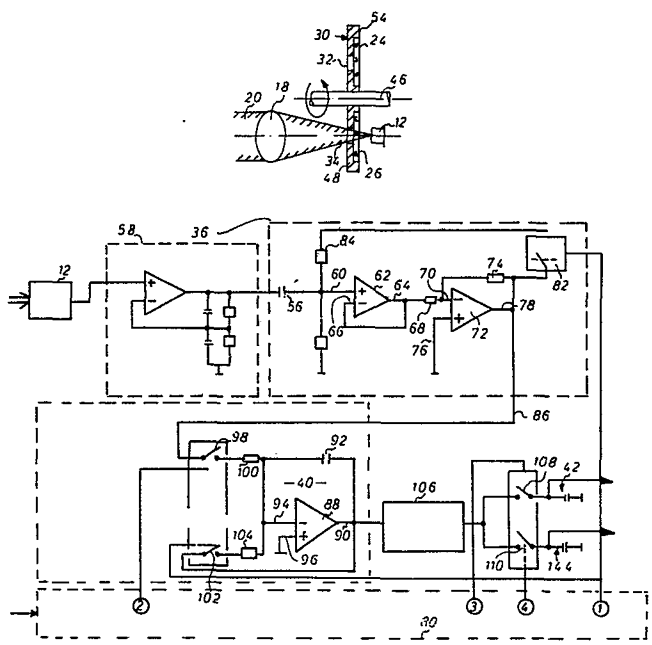

EP 0 020 801 A1

0020801

BEZEICHNUNG
siehe Titelseite

Die Erfindung betrifft ein Bifrequenz-Infrarotspektrometer, enthaltend: eine Strahlungsquelle, welche Infrarotstrahlung emittiert, einen auf Infrarotstrahlung ansprechenden Detektor, eine Probenküvette zwischen Strahlungsquelle und Detektor, ein optisches System, welches ein von der Strahlungsquelle ausgehendes Strahlungsbündel durch die Küvette hindurch auf den Detektor leitet, eine Filtereinrichtung mit zwei in unterschiedlichen Wellenlängenbereichen im Infraroten durchlässigen Filtern, die alternierend in den Strahlengang des Strahlungsbündels bewegbar sind, und eine Signalauswerterschaltung, welche durch ein Steuersignal ein erstes Zeitintervall (Referenzfenster) festlegt, während welches das Strahlenbündel durch das eine der vorgenannten Filter auf den Detektor fällt, und ein zweites Zeitintervall (Meßfenster), während welches das Strahlenbündel durch das andere Filter auf den Detektor fällt, einen rücksetzbaren Integrator enthält, welcher das Detektorsignal über ein innerhalb des Referenzfensters liegendes Referenzzeitintervall und ein innerhalb des Meßfensters liegendes Meßzeitintervall integriert, und Speicherschaltungen aufweist, auf welche das Ausgangssignal des Integrators nach jedem Referenzintervall bzw. jedem Meßzeitintervall übertragen wird, wobei der Integrator anschließend jeweils auf null rücksetzbar ist.

Solche Bifrequenz-Infrarotspektrometer dienen beispielsweise zur Bestimmung der Konzentration eines absorbierenden Gases in einer Küvette. Bei einem solchen Bifrequenz-Infrarotspektrometer wird die Küvette von einem Strahlengang durchsetzt, der von einer Lichtquelle ausgeht und auf einen Detektor geleitet wird. In diesem Strahlengang sitzt eine rotierende Filterscheibe die abwechselnd bei verschiedene Wellenlängen oder Frequenzen durchläßt. Dabei fällt die eine durchgelassene Wellenlänge mit einer Absorptionsbande einer gesuchten Verbindung zusammen, während die andere Wellenlänge außerhalb der Absorptionsbande liegt und eine Berücksichtigung der Untergrundabsorption, von Änderungen der Lichtquellenhelligkeit oder der Detektorempfindlichkeit gestattet. Bei einigen Substanzen, z.B. Uranhexafluorid liegt die wesentliche Absorptionsbande, die für eine Messung ausnutzbar ist, im mittel- bis langwelligen Infrarot. Es muß daher das eine Filter in diesem Bereich durchlässig sein und der Detektor muß auf solche Strahlung ansprechen.

Die Schwierigkeit, die bei der Messung im mittel- bis langwelligen Infrarot auftritt, ist die Eigenstrahlung der verschiedenen Bauteile des Geräts. Ein wesentlicher Faktor dabei ist die Eigenstrahlung der Filter selbst. Diese Eigenstrahlung ist ebenfalls in der Filterwechselfrequenz moduliert. Sie ist nicht auf den engen Durchsatzbereich der Filter beschränkt, und da der Detektor im allgemeinen unspezifisch auf die Gesamtstrahlung anspricht, kann dieses durch die Eigenstrahlung der Filter hervorgerufene Störsignal zu einer erheblichen Verfälschung des Meßsignals führen.

Der Erfindung liegt die Aufgabe zugrunde, ein Bifrequenz-Infrarotspektrometer der eingangs definierten Art so auszubilden, daß der Einfluß der Eigenstrahlung der Filter eliminiert wird.

Erfindungsgemäß wird diese Aufgabe dadurch gelöst, daß

(a) die Filter detektorseitig auf einem Träger montiert sind, welcher im Bereich jedes Filters einen Durchbruch aufweist, dessen Abmessungen kleiner als die des Filters sind,

(b) der Träger mit den Durchbrüchen durch den Strahlengang des Strahlungsbündels bewegbar ist, wobei das Strahlungsbündel alternierend durch jeweils einen Durchbruch und ein Filter auf den Detektor fällt und vorher das Strahlungsbündel durch den strahlungsquellenseitigen Träger abgedeckt wird, während sich Teile des Filters neben dem Durchbruch detektorseitig im Strahlengang befinden,

(c) eine Klemmschaltung vorgesehen ist, durch welche das Detektorsignal während des Referenzfensters und während des Meßfensters jeweils bis kurz vor Beginn des Referenzintervalls bzw. des Meßzeitintervalls an eine Nullinie geklemmt wird.

Bei der erfindungsgemäßen Anordnung "sieht" der Detektor jeweils zunächst Filteroberfläche, die durch den Träger gegen die Strahlungsquelle abgedeckt ist. Das Detektorsignal entspricht daher der Eigenstrahlung des Filters. Dieses Detektorsignal wird durch die Klemmschaltung an eine Nullinie geklemmt. Während des anschließenden Referenz- oder Meßzeitintervalls wird dann nur die Änderung des Detektorsignals gegenüber dem durch die Eigenstrahlung hervorgerufenen Detektorsignal integriert. Es wird so ein Meßwert unabhängig von der Eigenstrahlung erhalten.

Weitere Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Fig. 1 zeigt schematisch ein Bifrequenz-Infrarotspektrometer.

Fig. 2 zeigt in Seitenansicht die Filtereinrichtung bei dem Bifrequenz-Infrarotspektrometer nach Fig. 1.

Fig. 3 ist eine Ansicht in Richtung des Pfeils A von Fig. 2.

Fig. 4 ist ein vereinfachtes Schaltbild der Signalverarbeitungsschaltung.

Fig. 5 zeigt das Impulsdiagramm der Ablaufsteuerung für die Signalverarbeitungsschaltung von Fig. 4.

Das Bifrequenz-Infrarotspektrometer enthält eine Strahlungsquelle 10, welche Infrarotstrahlung emittiert, einen auf Infrarotstrahlung ansprechenden Detektors 12, eine Probenküvette 14 zwischen Strahlungsquelle und Detektor und ein optisches System, dargestellt durch die Linsen 16 und 18, welches ein von der Strahlungsquelle 10 ausgehendes Strahlungsbündel 20 durch die Küvette 14 hindurch auf den Detektor leitet. Es ist weiterhin eine Filtereinrichtung 22 mit zwei in unterschiedlichen Wellenlängenbereichen in infraroten durchlässigen Filtern 24,26 vorgesehen, die alternierend in den Strahlengang des Strahlungsbündels 20 bewegbar sind. Das Detektorsignal von dem Detektor 12 wird auf eine noch zu beschreibende Signalauswerterschaltung 28

gegeben.

Wie aus Fig. 2 und 3 ersichtlich ist, sind die Filter 24,26 detektorseitig auf einem Träger 30 montiert, welcher im Bereich jedes Filters 24,26 einen Durchbruch 32 bzw. 34 aufweist, dessen Abmessungen kleiner als die des Filters 24 bzw. 26 sind. Der Träger 30 mit den Durchbrüchen 32,34 ist durch den Strahlengang des Strahlungsbündels 20 bewegbar, wobei das Strahlungsbündel alternierend durch jeweils einen Durchbruch 32,34 und ein Filter 24,26 auf den Detektor 12 fällt. Vorher wird das Strahlungsbündel 20 durch den strahlungsquellenseitigen Träger 30 abgedeckt, während sich Teile des Filters 24 oder 26 neben dem Durchbruch 32 bzw. 34 detektorseitig im Strahlengang befindet. Bevor also das Strahlungsbündel 20 auf den Detektor 12 fällt, empfängt der Detektor 12 andere reine Eigenstrahlung in die Filter 24 oder 26 selbst, sowie die durch die Filter reflektierte Störstrahlung. In der Signalverarbeitungsschaltung 28 ist nun eine Klemmschaltung 36 vorgesehen, durch welche das Detektorsignal bis kurz vor die eigentliche Messung an eine Nullinie geklemmt wird, wie unter Bezugnahme auf Fig. 4 und 5 noch zu beschreiben ist.

Wie aus Fig. 5 ersichtlich ist, legt die Signalauswerterschaltung 28 durch ein Steuersignal 38 ein erstes Zeitintervall (Referenzfenster) fest, während welches das Strahlungsbündel 20 durch das eine der vorgenannten Filter 24 auf den Detektor fällt und ein zweites Zeitintervall (Meßfenster), während welches das Strahlungsbündel 20 durch das andere Filter 26 auf den Detektor fällt. Die Signalauswerterschaltung enthält weiterhin einen rücksetzbaren Integrator 40, welcher das Detektorsignal über ein innerhalb des Referenzfensters liegendes Referenzzeitintervall 42 (Fig. 5) und ein innerhalb des Meßfensters liegendes Meßzeitintervall 44 integriert. Es sind weiterhin Speicherschaltungen 43,45 vorgesehen, auf welche das Ausgangssignal des Integrators 40 nach jedem Referenzzeitintervall 42 bzw. Meßzeitintervall 44 übertragen wird, wobei der Integrator 40 anschließend jeweils auf Null rücksetzbar ist.

Wie aus Fig. 2 und 3 ersichtlich ist enthält im einzelnen die Filteranordnung eine um eine Umlaufachse 46 rotierende Scheibe 48, welche die beiden in bezug auf die Umlaufachse 46 zentralsymmetrischen Durchbrüche 32 und 34 aufweist. Dabei ist jeder Durchbruch 32 und 34 von einem bogenförmigen, um die Umlaufachse 46 gekrümmten Schlitz gebildet. Die Durchbrüche 32,34 sind detektorseitig durch je ein sich seitlich über den Durchbruch 32,34 hinauserstreckendes Filter 24 bzw. 26 abgedeckt. Dabei ist jedes Filter 24 und 26 von einer im wesentlichen halbkreisförmigen Filterplatte gebildet, die auf der Scheibe 48 befestigt ist und mit seiner geraden Kante, z.B. 50, an die gerade Kante 52 des anderen Filters, in diesem Fall des Filters 26, anschließt. Die Scheibe 48 weist detektorseitig einen zur Umlaufachse 46 konzentrisch vorstehenden Rand 54 auf. Die beiden halbkreisförmigen Filterplatten 24 und 26, die sich zu einem Vollkreis ergänzen, werden in dem vorstehenden Rand 54 zentriert gehalten.

Wie aus Fig. 4 ersichtlich ist, enthält die Klemmschaltung 36 einen Kondensator 56, über welchen der Ausgang des Detektors 12 oder eines des nachgeschalteten Filters 58 auf den nicht invertierenden Eingang 60 eines als Impedanzwandler wirkenden ersten Operationsverstärkers 62 geschaltet ist, wobei der Ausgang 64 dieses Operationsverstärkers mit dem invertierenden Eingang 66 verbunden. Der Ausgang 64 des ersten Operationsverstärkers ist über einen Widerstand 68 auf den invertierenden Eingang 70 eines zweiten Operationsverstärkers 72 geschaltet. Der Ausgang des zweiten Operationsverstärkers 72 ist über einen weiteren Widerstand 74 mit dem invertierenden Eingang verbunden.

Der nichtinvertierende Eingang 76 des Operationsverstärkers 72 ist geerdet. Auf diese Weise erfolgt eine Verstärkung des am ersten Operationsverstärker 62 erhaltenen Signals. Der Ausgang 78 des zweiten Operationsverstärkers 72 ist über einen von einer Ablaufsteuerung 80 gesteuerten Schalter 82 und einen Widerstand 84 mit dem Eingang 60 des ersten Operationsverstärkers 62 verbindbar.

Durch Schließen des Schalters 82 erfolgt eine Umladung des Kondensators 56 durch die verstärkte Spannung vom zweiten Operationsverstärker 72, bis die Spannung am ersten Operationsverstärker 62 zu Null wird. Das Ausgangssignal der Klemmschaltung 36 wird vom Ausgang 78 des zweiten Operationsverstärkers 72 abgegriffen, wie durch Leitung 86 angedeutet ist.

Der Integrator 40 enthält einen Operationsverstärker 88, dessen Ausgang 90 über einen Kondensator 92 mit dem invertierenden Eingang 94 des Operationsverstärkers 88 verbunden ist. Der nichtinvertierende Eingang 96 des Operationsverstärkers 88 ist geerdet. Der invertierende Eingang 94 ist über einen ersten Schalter 98 und einen ersten Widerstand 100 mit der Leitung 86, also dem Ausgang der Klemmschaltung 36 verbunden. Ein zweiter, von der Ablaufsteuerung 80 gesteuerter Schalter 102 überbrückt zum Rücksetzen des Integrators 40 in Reihe mit einem Entladewiderstand 104 den Kondensator 92.

Dem Integrator 40 ist ein Logarithmierer 106 nachgeschaltet. Der Ausgang des Logarithmierers 106 ist über einen dritten Schalter 108 auf die erste analoge Speicherschaltung 42 und über einen vierten Schalter 110 auf die zweite analoge Speicherschaltung 44 übertragbar, wobei das dritte und vierte Schalter 108 bzw. 110 durch die Ablaufsteuerung 80 nach jedem Referenz bzw. Meßzeitintervall 42 bzw. 44 kurzzeitig im schließenden Sinne ansteuerbar sind.

In Fig. 4 sind die verschiedenen Steuersignale, die von der Ablaufsteuerung abgegeben werden mit "1", "2", "3" und "4" bezeichnet. Die entsprechenden Signalverläufe sind in Fig. 5 dargestellt.

Es ist in der vorstehenden Beschreibung von "Schaltern" die Rede, und in Fig. 4 sind der Anschaulichkeit halber mechanische Schalter dargestellt. In der Praxis werden diese Schalter jedoch in dem Fachmann geläufiger Weise als elektronische Schalter ausgebildet.

Ein Bifrequenz-Infrarotspektrometer ist ein Gerät, das in zyklischer Folge eine Messung bei einer ersten Wellenlänge durchführt, die einer Absorptionsbande einer Substanz entspricht, und eine Messung bei einer zweiten Wellenlänge, die außerhalb dieser Absorptionsbande liegt. Die Filtereinrichtung kann auch mehr als zwei Filter enthalten, so daß mehrere Substanzen auf diese Weise gleichzeitig bestimmt werden können. Auch diese Möglichkeit soll mit dem Ausdruck "Bifrequenz-Infrarotspektrometer" mit erfaßt werden.

## Patentansprüche

1. Bifrequenz-Infrarotspektrometer, enthaltend:

eine Strahlungsquelle, welche Infrarotstrahlung emittiert,

einen auf Infrarotstrahlung ansprechenden Detektor,

eine Probenküvette zwischen Strahlungsquelle und Detektor,

ein optisches System, welches ein von der Strahlungsquelle ausgehendes Strahlungsbündel durch die Küvette hindurch auf den Detektor leitet,

eine Filtereinrichtung mit zwei in unterschiedlichen Wellenlängenbereichen im Infraroten durchlässigen Filtern, die alternierend in den Strahlengang des Strahlungsbündels bewegbar sind, und

eine Signalauswerterschaltung, welche

> durch ein Steuersignal ein erstes Zeitintervall (Referenzfenster) festlegt, während welches das Strahlungsbündel durch das eine der vorgenannten Filter auf den Detektor fällt, und ein zweites Zeitintervall (Meßfenster), während welches das Strahlungsbündel durch das andere Filter auf den Detektor fällt, einen rücksetzbaren Integrator enthält, welcher das Detektorsignal über ein innerhalb des Referenzfensters liegendes Referenzzeitintervall und ein innerhalb des Meßfensters liegendes Meßzeitintervall integriert, und

Speicherschaltungen aufweist, auf welche das Ausgangssignal des Integrators nach jedem Referenzzeitintervall bzw. jedem Meßzeitintervall übertragen wird, wobei der Integrator anschließend jeweils auf null rücksetzbar ist,

dadurch gekennzeichnet, daß

(a) die Filter (24,26) detektorseitig auf einem Träger (30) montiert sind, welcher im Bereich jedes Filters (24,26) einen Durchbruch (32,34) aufweist, dessen Abmessungen kleiner als die des Filters (24,26) sind,

(b) der Träger (30) mit den Durchbrüchen (32,34) durch den Strahlengang des Strahlungsbündels (20) bewegbar ist, wobei das Strahlungsbündel (20) alternierend durch jeweils einen Durchbruch (32,34) und ein Filter (24,26) auf den Detektor (12) fällt und vorher das Strahlungsbündel (20) durch den strahlungsquellenseitigen Träger (30) abgedeckt wird, während sich Teile des Filters (24,26) neben dem Durchbruch (32,34) detektorseitig im Strahlengang befinden,

(c) eine Klemmschaltung (36) vorgesehen ist, durch welche das Detektorsignal während des Referenzfensters und während des Meßfensters jeweils bis kurz vor Beginn des Referenzzeitintervall (42) bzw. des Meßzeitintervalls (44) an eine Nullinie geklemmt wird.

2. Bifrequenz-Infrarotspektrometer nach Anspruch 1, dadurch gekennzeichnet, daß die Filteranordnung (22) eine um eine Umlaufachse rotierende Scheibe (48) mit zwei in Bezug auf Umlaufachse (46) zentralsymmetrischen Durchbrüchen (32,34) aufweist und die Durchbrüche (32,34) detektorseitig durch je ein sich seitlich über den Durchbruch (32,34) hinauserstreckendes Filter (24,26) abgedeckt sind.

3. Bifrequenz-Infrarotspektrometer nach Anspruch 2, dadurch gekennzeichnet, daß

(a) jeder Durchbruch (32,34) von einem bogenförmigen, um die Umlaufachse (46) gekrümmten Schlitz gebildet ist und

(b) jedes Filter (24,26) von einer im wesentlichen halbkreisförmigen Filterplatte gebildet ist, die auf der Scheibe (48) befestigt ist und mit seiner geraden Kante (z.B. 50) an die gerade Kante (52) des anderen Filters (26) anschließt.

4. Bifrequenz-Infrarotspektrometer nach Anspruch 3, dadurch gekennzeichnet, daß die Scheibe (48) detektorseitig einen zur Umlaufachse (46) konzentrischen, vorstehenden Rand (54) aufweist und die beiden halbkreisförmigen Filterplatten, die sich zu einem Vollkreis ergänzen, in dem vorstehenden Rand (54) zentriert gehalten werden.

5. Bifrequenz-Infrarotspektrometer nach einem der Ansprüche 1 bis 4, dadurch gekennzeichnet, daß

(a) die Klemmschaltung (36) einen Kondensator (56) enthält, über welchen der Ausgang des Detektors (12) oder eines diesem nachgeschalteten Filters (58) auf den nichtinvertierenden Eingang (60) eines als Impedanzwandler wirkenden ersten Operationsverstärkers (62) geschaltet ist, wobei der Ausgang (64) dieses Operationsverstärkers (62) mit dem invertierenden Eingang (66) verbunden ist,

(b) der Ausgang des ersten Operationsverstärkers (62) über einen Widerstand (68) auf den invertierenden Eingang (70) eines zweiten Operationsverstärkers (72) geschaltet ist, dessen Ausgang (78) über einen weiteren Widerstand (74) mit dem invertierenden Eingang (70) verbunden und dessen nichtinvertierender Eingang (76) geerdet ist, so daß eine Verstärkung des am ersten Operationsverstärker (62) erhaltenen Signals erfolgt, und

(c) der Ausgang des zweiten Operationsverstärkers (72) über einen von einer Ablaufsteuerung (80) gesteuerten Schalter (82) und einen Widerstand (84) mit dem Eingang (60) des ersten Operationsverstärkers (62) verbindbar ist,

wobei durch Schließen des Schalters (82) eine Umladung des Kondensators (56) durch die verstärkte Spannung vom zweiten Operationsverstärkers (72) erfolgt, bis die Spannung am ersten Operationsverstärker (62) zu null wird, und das Ausgangssignal der Klemmschaltung (36) vom Ausgang (78) des zweiten Operationsverstärkers (72) abgegriffen wird.

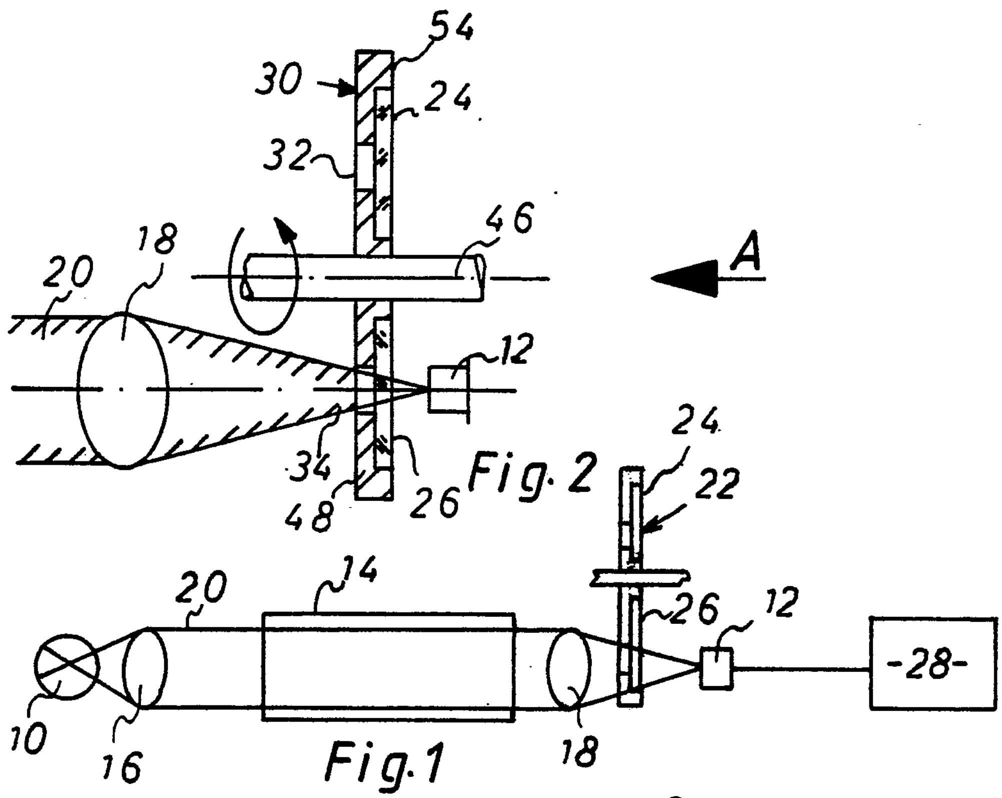


Fig. 2

Fig. 1

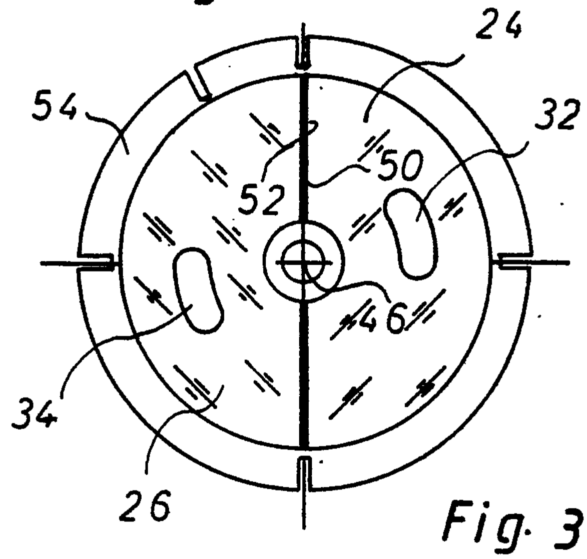


Fig. 3

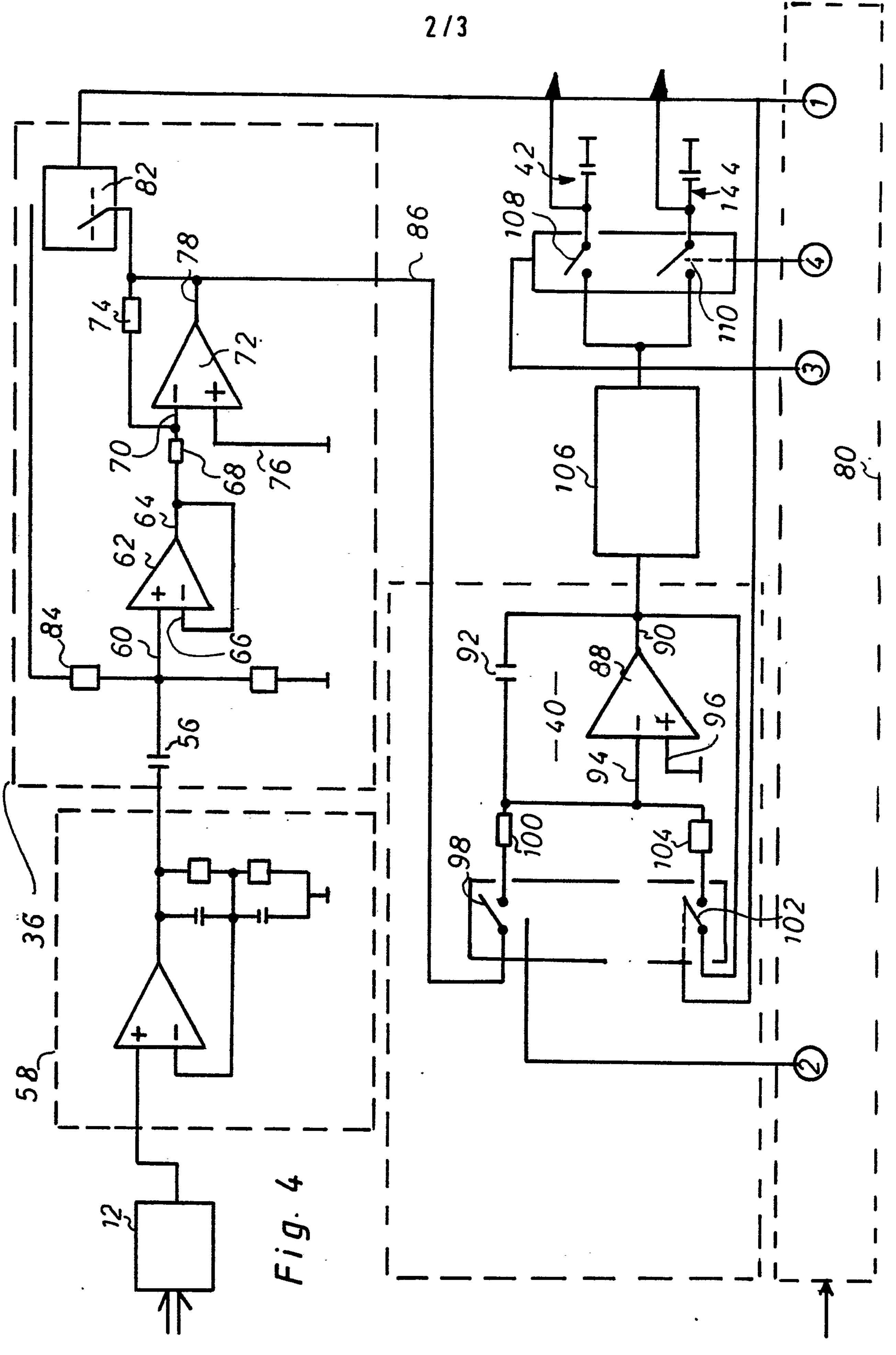
1
2
3
4
12
36
40
42
56
58
60
62
64
66
68
70
72
74
76
78
80
82
84
86
88
90
92
94
96
98
100
102
104
106
108
110
144

Fig. 4

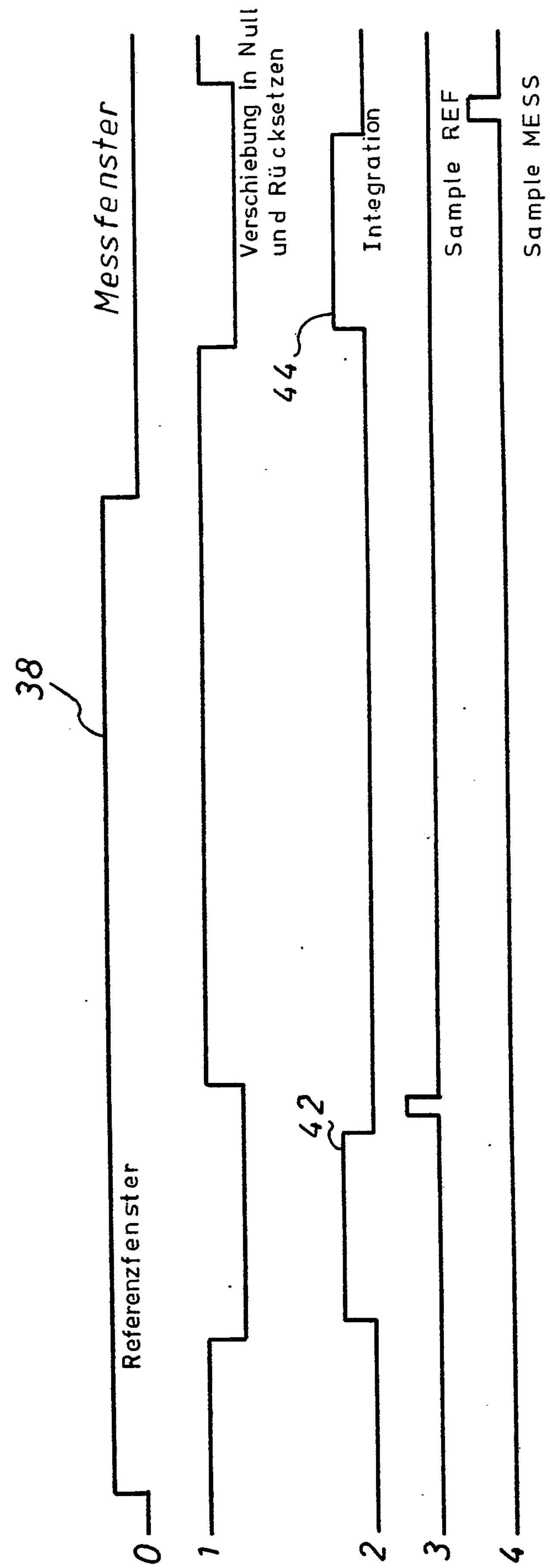
Messfenster
Verschiebung in Null
und Rücksetzen
Integration
Sample REF
Sample MESS
44
38
42
Referenzfenster
0
1
2
3
4

Fig. 5

Europäisches Patentamt

# EUROPÄISCHER RECHERCHENBERICHT

0020801
Nummer der Anmeldung

EP 79 10 1976

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 087 690 (J.M. PROBER)<br>* Spalte 4, Mitte; Fig. 2, 3 * | 1,2 |
| | DE - A - 2 053 007 (A.R. LINDBERG)<br>* Fig. 2 * | 3 |
| | DE - A - 1 547 332 (INCENTIVE RESEARCH & DEVELOPMENT AB)<br>* Fig. 1, Positionen 5, 6, 7 * | 3,4 |
| | DE - A - 1 472 163 (E. LEITZ GMBH)<br>* Seite 8, Zeilen 4 bis 6 * | 4 |
| A | US - A - 3 790 797 (S.R. STERNBERG et al.)<br>* Fig. 15, Position 112 * | 1 |
| A | DE - A - 2 331 191 (DURST AG)<br>* Anspruch 1 * | 4 |
| A | US - A - 4 013 260 (E.A. McCLATCHIE et al.)<br>* ganzes Dokument * | |
| A | US - A - 3 833 304 (M.D. LISTON)<br>* ganzes Dokument * | |
| A | US - A - 3 825 756 (M. WEISS)<br>* ganzes Dokument * | |

KLASSIFIKATION DER ANMELDUNG (Int.Cl.3)

G 01 J 3/42
G 01 N 21/35

RECHERCHIERTE SACHGEBIETE (Int. Cl.3)

G 01 J 3/00
G 01 N 21/35

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 17-04-1980 | FUCHS |